# EUROPÄISCHE PATENTSCHRIFT

(11) **EP 0 949 641 B1**
(45) Veröffentlichungstag und Bekanntmachung des Hinweises auf die Patenterteilung: **16.02.2005**
(21) Anmeldenummer: 99106443.7
(22) Anmeldetag: 29.03.1999
(51) Int. Cl.: H01G 2/10, H01G 4/38

(54) **Leistungskondensator**
Power capacitor
Condensateur de puissance

(30) Priorität: 01.04.1998 DE 19814700
(43) Veröffentlichungstag der Anmeldung: 13.10.1999
(73) Patentinhaber: Vishay Electronic GmbH, 84034 Landshut (DE)
(72) Erfinder: Huber, Robert, 84056 Rottenburg (DE)
(74) Vertreter: Manitz, Finsterwald & Partner GbR

(56) Entgegenhaltungen:
- GB-A- 517 718
- US-A- 4 408 818

## Beschreibung

Die Erfindung betrifft einen Leistungskondensator mit mehreren in einem gemeinsamen Gehäuse untergebrachten runden Wickelelementen.

Die bisher üblichen Leistungskondensatoren dieser Art besitzen in der Regel ein im Querschnitt kreisrundes oder viereckiges Gehäuse, siehe z.B. US-A-4 408 818. Leistungskondensatoren mit kreisrunden Gehäusen weisen u.a. den Nachteil auf, daß jegliche Anordnung, in der mehrere solche Kondensatoren aneinandergereiht sind, relativ viel Platz in Anspruch nimmt. Zudem ist die äußere Kühlfläche derartiger Kondensatoren relativ klein. Kondensatoren mit einem im Querschnitt rechteckigen oder quadratischen Gehäuse können zwar besser aneinandergereiht werden. Nachteilig bei solchen Kondensatoren ist jedoch, daß bei der Verwendung von Rundwickeln das jeweilige Gehäusevolumen nur schlecht ausgenutzt wird. Bei den bekannten Kondensatoren ist es häufig auch erforderlich, daß sich elektrische Verbindungen unterschiedlichen Potentials kreuzen, was in der Regel mit einem relativ hohen Isolationsaufwand für die betreffende Verdrahtung verbunden ist. Darüber hinaus erfordert der Aufbau von elektrischen Dreieckschaltungen sowohl bei übereinander- und nebeneinanderliegenden als auch bei konzentrischen Rundwickeln stets ungleiche unsymmetrische Leitungslängen mit Überkreuzungen von Leitungen hohen unterschiedlichen Potentials, was u.a. den Nachteil unsymmetrischer Serienwiderstände und Induktivitäten sowie die Gefahr von Isolationsfehlern bei Innenverdrahtung mit sich bringt. Im Zusammenhang mit Sternschaltungen bei in zylindrischen Gehäusen untergebrachten übereinanderliegenden Rundwickeln ist regelmäßig ein relativ hoher Isolations- und Leitungsaufwand und viel Platz erforderlich, um den Sternpunkt zu bilden und die Phasenableitungen nach oben zum gemeinsamen Anschluß zu führen.

Zudem besteht bei vollvergossenen Rundwickelausführungen in zylindrischem Gehäuse im Fehlerfall, d.h. insbesondere bei einem nicht selbstheilenden Durchschlag mit Gasbildung, kaum die Möglichkeit, entstehendes Gas in den Anschlußraum abzuleiten, ohne daß dabei ein gefährlicher Überdruck entsteht. Zylindrische vergossene Kondensatoren benötigen deshalb besondere Kanäle oder durchlässige Wickelumhüllungen, um die Gasableitung zu erleichtern. Diese zusätzlich erforderlichen Maßnahmen sind jedoch stets mit einem erhöhten Platzbedarf, einem höheren Wärmewiderstand und höheren Zusatzkosten verbunden.

Ziel der Erfindung ist es, einen möglichst kompakten, im Aufbau einfachen und mit geringem herstellungstechnischem Aufwand fertigbaren Leistungskondensator der eingangs genannten Art zu schaffen, bei dem die zuvor genannten Nachteile beseitigt sind. Bei reduzierter Bauhöhe und vereinfachter Innenverdrahtung soll sowohl eine möglichst optimale Ausnutzung des Gehäusevolumens als auch eine gute Anreihfähigkeit gewährleistet sein.

Diese Aufgabe wird nach der Erfindung dadurch gelöst, daß wenigstens eine aus drei runden Wickelelementen bestehende Wickelelementgruppe im Gehäuse untergebracht ist, deren Wickelelemente mit zueinander parallelen Achsen sternförmig nebeneinander angeordnet sind, und daß das Gehäuse im Querschnitt allgemein die Form eines Dreiecks besitzt, dessen Ecken abgerundet sind und einen Krümmungsradius besitzen, der zumindest im wesentlichen dem Radius der runden Wickelelemente entspricht.

. Aufgrund dieser Ausbildung ergibt sich ein kompakter anreihfähiger Leistungskondensator reduzierter Bauhöhe, bei dem mit einer verbesserten Anreihfähigkeit und einer erhöhten Volumenausnutzung gleichzeitig zwei bisher einander entgegenstehende Forderungen erfüllt werden. Im Vergleich zu den bisher üblichen Kondensatoren mit kreisrunden Gehäusen wird nicht nur die Anreihfähigkeit verbessern, man erhält auch eine größere äußere Kühlfläche. Infolge der optimalen Ausnutzung des Gehäusevolumens ergibt sich auch ein geringerer Bedarf an Füllstoffen. Zudem ist mit den sich ergebenden drei zumindest im wesentlichen ebenen, bei Überdruck leichter nach außen ausbeulbaren Seitenwänden eine gegebenenfalls gewünschte Überdruck-Abschaltsicherung in Form einer Abreißsicherung einfacher realisierbar. Darüberhinaus ist insbesondere auch der Aufbau dreiphasiger Kondensatoren in einer Dreiecks-, einer Sternund einer offenen Schaltung vereinfacht, nachdem sämtliche Verbindungselemente eine gleiche Länge und Form besitzen und damit symmetrische Leitungswiderstände und Induktivitäten aufweisen können, wodurch die Herstellungskosten insgesamt gesenkt werden. In den zwischen den runden Wickelelementen gebildeten Zwickeln können insbesondere bei einer Dreieckschaltung und einer offenen Schaltung die Verdrahtungsleitungen problemlos verlegt werden. Auch bei einer Sternschaltung sind symmetrische, äußerst kurze Verbindungen für die Phasen und die Stirnseite möglich. Die Leitungen können auf einfache Weise an den Wickelstirnseiten angebracht werden, ohne daß sich dabei Verbindungen unterschiedlichen Potentials kreuzen. Entsprechend geringer wird auch der Isolationsaufwand für die Verdrahtung.

Bei einer in der Praxis bevorzugten Ausführungsform des erfindungsgemäßen Leistungskondensators besitzen die drei Wickelelemente einen gleichen Durchmesser, so daß das Gehäuse im Querschnitt allgemein die Form eines gleichseitigen Dreiecks annehmen kann.

In dem Gehäuse können eine oder auch mehrere jeweils aus drei runden Wickelelementen bestehende Wickelelementgruppen untergebracht sein. Sind mehrere solche Wickelelementgruppen vorgesehen, so sind diese zweckmäßigerweise übereinander angeordnet.

Grundsätzlich kann das vorzugsweise imprägnierte Gehäuse aus einem Metall- oder Kunststoffmaterial bestehen. Gemäß einer bevorzugten praktischen Ausführungsform besteht es aus fließgepreßtem Aluminium. Eine solche Herstellung aus Aluminium im Fließpreßverfahren bietet in Verbindung mit einem dicht verschweißten oder gebördelten Gehäuse einen optimalen Korrosionsschutz insbesondere für einen Freilufteinsatz.

Von besonderem Vorteil ist, wenn der Leistungskondensator mit einer Überdruck-Abschaltsicherung versehen ist, bei der es sich beispielsweise um eine Abreißsicherung handeln kann. Dabei können deckelseitig elektrische Anschlüsse durch das geschlossene, teilweise mit einer Füllung, vorzugsweise einem Vergußmaterial, versehene Gehäuse geführt sein, die sich innerhalb des Gehäuses durch einen zwischen der Füllung und dem Gehäusedeckel belassenen Druckraum erstrecken und bei Auftreten eines vorgebbaren Überdrucks im Gehäuse unterbrechbar sind. Ist das Gehäuse teilweise mit einem von Druckgas durchdringbaren isolierenden Vergußmaterial gefüllt und der Druckraum zwischen diesem Vergußmaterial und dem Gehäusedeckel vorgesehen, so kann bereits dadurch eine zuverlässige und rasch ansprechende Überdruck-Abschaltsicherung verwirklicht werden, daß das Gehäuse zumindest im wesentlichen eben ausgebildete, bei Freiwerden von Druckgas ausbeulbare sowie Verbindungen zu dem Druckraum schaffende Seitenwände aufweist. Wesentlich ist hierbei, daß sich ebene Seitenwände bei einer Druckbeaufschlagung deutlich leichter ausbeulen, als dies bei gekrümmten Seitenwänden der Fall ist, so daß in der gewünschten Weise zum Druckraum hin offene Verbindungen geschaffen werden. Dabei ist gleichzeitig von Vorteil, daß im Normalbetrieb des Vergußmaterial über die gesamte Umfangsfläche mit dem Gehäuse in Verbindung steht, wodurch eine optimale Wärmeableitung gewährleistet ist.

Die elektrischen Anschlüsse können insbesondere an dem Gehäusedeckel fixiert sein, so daß sie bei einer mit einer Ausbeulung der Seitenwände erfolgenden Druckgasbeaufschlagung des Druckraumes von dem sich nach außen wölbenden Gehäusedeckel abgerissen werden.

Bei einer in der Praxis bevorzugten Ausführungsform des erfmdungsgemäßen Leistungskondensators sind die elektrischen Anschlüsse einerseits an dem Gehäusedeckel und andererseits an wenigstens einem in dem Druckraum angeordneten, einen vorgebbaren Abstand von dem Gehäusedeckel aufweisenden Stützelement, Gehäuseabsatz und/oder dergleichen fixiert. Dabei können die elektrischen Anschlüsse innerhalb des Gehäuses an wenigstens einem Stützelement fixiert sein, dessen Abstand von dem Gehäusedeckel durch wenigstens ein Abstands- oder Niederhalteelement bestimmt ist. Die Abreißkraft wirkt in diesem Fall gegen das Abstandsoder Niederhalteelement und das Stützelement bzw. wenigstens einen Gehäuseabsatz.

Bei einer bevorzugten praktischen Ausführungsform ist ein vorzugsweise mit einem Befestigungselement versehener verstärkter Gehäuseboden vorgesehen. Dabei kann der Gehäuseboden zumindest teilweise durch Vergußmaterial verstärkt sein, das zwischen dem Gehäuseboden und den einen vorgebbaren Abstand von diesem aufweisenden Wickelelementen vorgesehen ist. Der Gehäusedeckel kann insbesondere dünner als der Gehäuseboden ausgebildet sein. Durch die Verstärkung des Gehäusebodens wird eine im Fall eines Druckanstiegs auftretende Überlastung im Bodenbereich des Gehäuses vermieden.

Besteht das Gehäuse aus einem Metallmaterial, so kann zwischen den Seitenwänden des Gehäuses einerseits und der Füllung und den Wickelelementen andererseits zumindest eine elektrisch nicht leitende Isoliereinlage vorgesehen sein.

Wenigstens eine solche elektrisch nicht leitende Isoliereinlage kann auch zwischen nebeneinanderliegend angeordneten Wickelelementen vorgesehen sein. Liegen mehrere Wickelelemente oder Wickelelementgruppen übereinander, so kann auch zwischen diesen Wickelelementen bzw. Wikkelelementgruppen zumindest eine elektrisch nicht leitende Isoliereinlage vorgesehen sein.

Die Erfindung wird im folgenden anhand eines Ausführungsbeispiels unter Bezugnahme auf die Zeichnung näher erläutert; in dieser zeigen:
- Fig. 1: eine schematische, aufgeschnittene Seitenansicht eines Leistungskondensators mit mehreren in einem gemeinsamen Gehäuse untergebrachten runden Wikkelelementen,
- Fig. 2: eine Querschnittsansicht des Leistungskondensators, geschnitten entlang der Linie I-I der Fig. 1 und
- Fig. 3: eine Draufsicht des in Fig. 1 gezeigten Leistungskondensators.

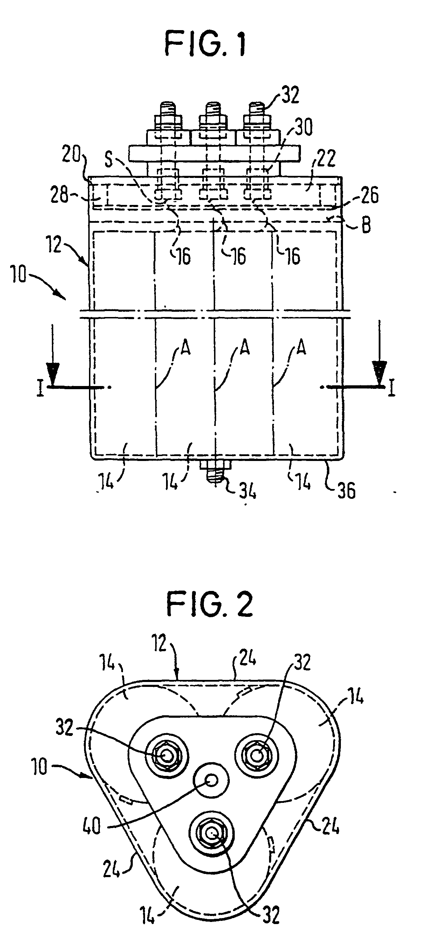

In den Fig. 1 bis 3 ist in rein schematischer Darstellung ein elektrischer Leistungskondensator 10 mit drei in einem gemeinsamen Gehäuse 12 untergebrachten runden Wickelelementen 14 gezeigt.

Dabei sind die drei runden Wickelelemente 14 mit zueinander parallelen Achsen A sternförmig nebeneinander angeordnet. Das Gehäuse 12 besitzt im Querschnitt allgemein die Form eines Dreiecks, dessen Ecken abgerundet sind und einen Krümmungsradius besitzen, der zumindest im wesentlichen dem Radius der runden Wickelelemente 14 entspricht.

Im vorliegenden Fall besitzen die drei Wickelelemente 14 einen gleichen Durchmesser, so daß das Gehäuse 12 im Querschnitt allgemein die Form eines gleichseitigen Dreiecks annimmt.

Das vorzugsweise aus fließgepreßtem Aluminium bestehende Gehäuse ist als geschlossenes Gehäuse 12 ausgebildet. Es kann zumindest teilweise mit Vergußmaterial, Öl und/oder Gas gefüllt sein. In der Fig. 1 ist das Niveau für das Vergußmaterial bzw. die Ölfüllung mit B bezeichnet.

Im vorliegenden Fall ist eine Füllung aus Vergußmaterial vorgesehen. Dabei ist der Leistungskondensator 10 zusätzlich mit einer im folgenden näher beschriebenen Überdruck-Abschaltsicherung S in Form einer Abreißsicherung versehen.

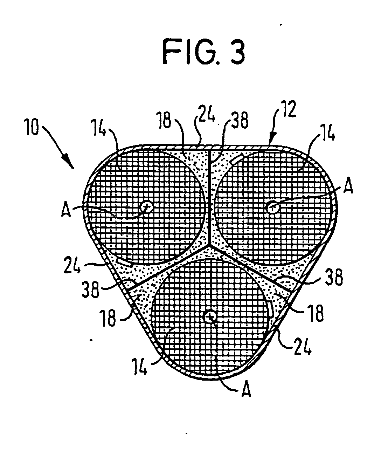

Wie insbesondere anhand von Fig. 1 zu erkennen ist, sind deckelseitig elektrische Anschlüsse 16 durch das geschlossene, teilweise mit Vergußmaterial 18 (vgl. Fig. 3) gefüllte Gehäuse 12 geführt, die sich innerhalb des Gehäuses 12 durch einen zwischen dem Vergußmaterial 18 und dem aus Isoliermaterial bestehenden Gehäusedeckel 20 belassenen Druckraum 22 erstrecken und bei Auftreten eines vorgebbaren Überdrucks im Gehäuse 12 unterbrechbar sind, d.h. im vorliegenden Fall abreißen.

Als Vergußmaterial 18 ist ein von Druckgas durchdringbares isolierendes Material vorgesehen, das vom Boden des Gehäuses 12 bis zum Niveau B (vgl. Fig. 1) reicht, wobei zwischen diesem Vergußmaterial 18 und dem Gehäusedeckel 20 der Druckraum 22 gebildet ist. Infolge der dreieckförmigen Querschnittsform des Gehäuses 12 weist dieses Gehäuse 12 drei zumindest im wesentlichen eben ausgebildete, bei Freiwerden von Druckgas ausbeulbare sowie Verbindungen zu dem Druckraum 22 schaffende Seitenwände 24 auf (vgl. insbesondere die Fig. 2 und 3).

Die elektrischen Anschlüsse 16 sind an dem Gehäusedeckel 20 fixiert. Sie werden bei einer mit einer Ausbeulung der Seitenwände 24 erfolgenden Druckgasbeaufschlagung des Druckraumes 22 von dem sich nach außen wölbenden Gehäusedeckel 20 abgerissen.

Im vorliegenden Fall sind die elektrischen Anschlüsse 16 einerseits an dem Gehäusedeckel 20 und andererseits an einem in dem Druckraum 22 angeordneten, einen vorgebbaren Abstand von dem Gehäusedeckel 20 aufweisenden Stützelement 26 fixiert. Dabei ist der Abstand zwischen dem Stützelement 26 und dem Gehäusedeckel 20 durch wenigstens ein Abstands- oder Niederhalteelement 28 bestimmt. Die Abreißkraft wirkt somit gegen das Stützelement 26 und das wenigstens eine Abstands- oder Niederhalteelement 28.

Die elektrischen Anschlüsse 16 können im Bereich von abdichtenden Durchführungen 30 am Gehäusedeckel 20 fixiert sein. Wie anhand der Fig. 1 und 2 zu erkennen ist, sind die elektrischen Anschlüsse 16 bis zu äußeren elektrischen Anschlußelementen 32 geführt.

Der mit einem Befestigungselement 34 (vgl. Fig. 1) versehene Gehäuseboden 36 ist durch Vergußmaterial 18 verstärkt, das zwischen dem Gehäuseboden 36 und den einen vorgebbaren Abstand von diesem aufweisenden Wickelelementen 14 vorgesehen ist. Damit wird die Stabilität des Gehäuses 12 im Bodenbereich verbessert.

Der Gehäusedeckel 20 ist vorzugsweise dünner als der auf diese Weise verstärkte Gehäuseboden 36 ausgebildet, so daß ein bei einem Störfall auftretender Überdruck im Gehäuse 12 eine nach außen gerichtete Aufwölbung des Gehäusedeckels 20 bewirkt, die letztlich ein Abreißen der elektrischen Anschlüsse 16 zur Folge hat.

Zwischen den Seitenwänden 24 des Gehäuses 12 einerseits und dem Vergußmaterial 18 bzw. den Wickelelementen 14 andererseits ist eine elektrisch nicht leitende Isoliereinlage 38 vorgesehen (vgl. insbesondere Fig. 3). Eine solche elektrisch nicht leitende Isoliereinlage ist auch zwischen jeweils zwei nebeneinanderliegend angeordneten Wickelelementen 14 angeordnet.

Im Deckelbereich des Gehäuses 12 ist eine zentrale Füllöffnung 40 für eine in das Gehäuse 12 einzubringende Füllung vorgesehen.

Die Wickelelemente 14 des Leistungskondensators 10 können gemäß einer Dreieckschaltung, einer Sternschaltung, parallel oder auch einphasig elektrisch verschaltet sein. Es sind sowohl Durchführungen als Dreier-Baugruppen für dreiphasige Kondensatoren als auch Durchführungen in Form von Einzeldurchführungen denkbar. Von besonderem Vorteil ist der Aufbau eines dreiphasigen Kondensators in einer Dreieckschaltung, einer Sternschaltung oder einer offenen Schaltung.

### Bezugszeichenliste

- 10: Leistungskondensator
- 12: Gehäuse
- 14: runde Wickelelemente
- 16: elektrische Anschlüsse
- 18: Vergußmaterial
- 20: Gehäusedeckel
- 22: Druckraum
- 24: Seitenwände
- 26: Stützelement
- 28: Abstands- oder Niederhalteelemente
- 30: Durchführungen
- 32: elektrische Anschlußelemente
- 34: Befestigungselement
- 36: Gehäuseboden
- 38: Isoliereinlagen
- 40: Füllöffnung
- A: Achsen
- B: Füllniveau
- S: Überdruck- und Abschaltsicherung

## Patentansprüche

1. Leistungskondensator (10) mit mehreren in einem gemeinsamen Gehäuse (12) untergebrachten runden Wickelelementen (14),
**dadurch gekennzeichnet,**
**daß** wenigstens eine aus drei runden Wickelelementen (14) bestehende Wickelelementgruppe im Gehäuse (12) untergebracht ist, deren Wickelelemente (14) mit zueinander parallelen Achsen (A) sternförmig nebeneinander angeordnet sind, und daß das Gehäuse (12) im Querschnitt allgemein die Form eines Dreiecks besitzt, dessen Ecken abgerundet sind und einen Krümmungsradius besitzen, der zumindest im wesentlichen dem Radius der runden Wickelelemente (14) entspricht.

2. Leistungskondensator nach Anspruch 1,
**dadurch gekennzeichnet,**
**daß** die drei Wickelelemente (14) einen gleichen Durchmesser besitzen und daß das Gehäuse (12) im Querschnitt allgemein die Form eines gleichseitigen Dreiecks besitzt.

3. Leistungskondensator nach Anspruch 1 oder 2,
**dadurch gekennzeichnet,**
**daß** mehrere übereinander angeordnete jeweils aus drei runden Wickelelementen (14) bestehende Wickelelementgruppen im Gehäuse (12) untergebracht sind.

4. Leistungskondensator nach einem der vorhergehenden Ansprüche,
**dadurch gekennzeichnet,**
**daß** das imprägnierte Gehäuse (12) aus einem Metall- oder Kunststoffmaterial oder aus fliesgepreßtem Aluminium besteht.

5. Leistungskondensator nach einem der vorhergehenden Ansprüche,
**dadurch gekennzeichnet,**
**daß** das Gehäuse (12) als geschlossenes Gehäuse ausgebildet und zumindest teilweise mit einer Füllung (18) aus Vergußmaterial, Öl und/oder Gas versehen ist.

6. Leistungskondensator nach einem der vorhergehenden Ansprüche,
**dadurch gekennzeichnet,**
**daß** er mit einer Überdruck-Abschaltsicherung versehen ist.

7. Leistungskondensator nach Anspruch 6,
**dadurch gekennzeichnet,**
**daß** deckelseitig elektrische Anschlüsse (16) durch das geschlossene, teilweise mit einer Füllung (18) versehene Gehäuse (12) geführt sind, die sich innerhalb des Gehäuses (12) durch einen zwischen der Füllung (18) und dem Gehäusedeckel (20) belassenen Druckraum (22) erstrecken und bei Auftreten eines vorgebbaren Überdrucks im Gehäuse (12) unterbrechbar sind.

8. Leistungskondensator nach Anspruch 7,
**dadurch gekennzeichnet,**
**daß** das Gehäuse (12) teilweise mit einem von Druckgas durchdringbaren isolierenden Vergußmaterial (18) gefüllt und der Druckraum (22) zwischen diesem Vergußmaterial (18) und dem Gehäusedeckel (20) vorgesehen ist und daß das Gehäuse (12) drei zumindest im wesentlichen eben ausgebildete, bei Freiwerden von Druckgas ausbeulbare sowie Verbindungen zu dem Druckraum (22) schaffende Seitenwände (24) aufweist.

9. Leistungskondensator nach einem der Ansprüche 6 bis 8,
**dadurch gekennzeichnet,**
**daß** die elektrischen Anschlüsse (16) an dem Gehäusedeckel (20) fixiert sind und bei einer mit einer Ausbeulung der Seitenwände (24) erfolgenden Druckgasbeaufschlagung des Druckraumes (22) von dem sich nach außen wölbenden Gehäusedeckel (20) abgerissen werden.

10. Leistungskondensator nach Anspruch 9,
**dadurch gekennzeichnet,**
**daß** die elektrischen Anschlüsse (16) einerseits an dem Gehäusedeckel (20) und andererseits an wenigstens einem in dem Druckraum (22) angeordneten, einen vorgebbaren Abstand von dem Gehäusedeckel (20) aufweisenden Stützelement (26), Gehäuseabsatz und/oder dergleichen fixiert sind.

11. Leistungskondensator nach Anspruch 10,
**dadurch gekennzeichnet,**
**daß** die elektrischen Anschlüsse (16) innerhalb des Gehäuses (12) an wenigstens einem Stützelement (26) fixiert sind, dessen Abstand von dem Gehäusedeckel (20) durch wenigstens ein Abstands- oder Niederhalteelement (28) bestimmt ist.

12. Leistungskondensator nach einem der vorhergehenden Ansprüche,
**dadurch gekennzeichnet,**
**daß** ein vorzugsweise mit einem Befestigungselement (34) versehener verstärkter Gehäuseboden (36) vorgesehen ist, wobei der Gehäuseboden (36) zumindest teilweise durch Vergußmaterial (18) verstärkt ist, das zwischen dem Gehäuseboden (36) und den einen vorgebbaren Abstand von diesem aufweisenden Wickelelementen (14) vorgesehen ist.

13. Leistungskondensator nach einem der vorhergehenden Ansprüche,
**dadurch gekennzeichnet,**
**daß** der Gehäusedeckel (20) dünner als der Gehäuseboden (36) ausgebildet ist, und daß vorzugsweise zwischen den Seitenwänden (24) des Gehäuses (12) einerseits und der Füllung (18) oder den Wickelelementen (14) andererseits zumindest eine, im Bereich der Wickelelemente (14) liegende elektrisch nichtleitende Isoliereinlage (38) vorgesehen ist.

14. Leistungskondensator nach einem der vorhergehenden Ansprüche,
**dadurch gekennzeichnet,**
**daß** zwischen nebeneinanderliegend angeordneten Wickelelementen (14) zumindest eine elektrisch nichtleitende Isoliereinlage (38) vorgesehen ist.

15. Leistungskondensator nach einem der vorhergehenden Ansprüche,
**dadurch gekennzeichnet,**
**daß** zwischen nebeneinanderliegend oder übereinanderliegend angeordneten Wickelelementen (14) zumindest eine elektrisch nichtleitende Isoliereinlage (38) vorgesehen ist.

## Claims

1. Power capacitor (10) having a plurality of round, wound elements (14) accommodated in a common housing (12), **characterized in that** at least one wound element group comprising three round wound elements (14) is accommodated in the housing (12), with the wound elements (14) of the group being arranged in a star-like arrangement alongside one another with their axes (A) parallel to one another, and **in that** the housing (12) generally has the shape of a triangle in cross-section whose comers are rounded and have a radius of curvature, which corresponds at least substantially to the radius of the round, wound elements (14).

2. Power capacitor in accordance with claim 1, **characterized in that** the three wound elements (14) have the same diameter and **in that** the housing (12) generally has the shape of an equilateral triangle in cross-section.

3. Power capacitor in accordance with claim 1 or claim 2, **characterized in that** a plurality of wound element groups, each consisting of three round, wound elements (14) are accommodated above one another in the housing (12).

4. Power capacitor in accordance with any one of the preceding claims, **characterized in that** the impregnated housing (12) consists of a metal material or of a plastic material or of flow pressed aluminum.

5. Power capacitor in accordance with any one of the preceding claims, **characterized in that** the housing (12) is formed as a closed housing and is at least partly provided with a filling (18) of potting material, oil and/or gas.

6. Power capacitor in accordance with any one of the preceding claims, **characterized in that** it is provided with an overpressure switch off safety device.

7. Power capacitor in accordance with claim 6, **characterized in that** electrical connections (16) at the cover side are led through the closed housing (12) partly provided with a filling (18) and extend within the housing (12) through a pressure space (22) left between the filling (18) and the housing cover (20) and are interruptable on the occurrence of a predeterminable overpressure in the housing (12).

8. Power capacitor in accordance with claim 7, **characterized in that** the housing (12) is partly filled with an insulating potting material (18) permeable by pressure gas and the pressure space (22) is provided between this potting material (18) and the housing cover (20); and **in that** the housing (12) has three, at least substantially flat side walls (24), which can bend outwardly when pressure gas is liberated and also provide connections to the pressure space (22).

9. Power capacitor in accordance with any one of the claims 6 to 8, **characterized in that** the electrical connections (16) are fixed to the housing cover (20) and are torn away from the outwardly arching housing cover (20) on pressure loading of the pressure space (22), which takes place with an outward bending of the side walls (24).

10. Power capacitor in accordance with claim 9, **characterized in that** the electrical connections (16) are fixed at the one end to the housing cover (20) and at the other end to at least one support element, housing step and/or the like arranged in the pressure space (22) and having a predeterminable spacing from the housing cover (20).

11. Power capacitor in accordance with claim 10, **characterized in that** the electrical connections (16) are fixed within the housing (12) to at least one support element (26), the spacing of which from the housing cover (20) is determined by at least one spacer or holding down element (28).

12. Power capacitor in accordance with any one of the preceding claims, **characterized in that** a reinforced housing base (36) is provided, which is preferably provided with a fastening element (34), wherein the housing base (36) is reinforced at least partly by potting material (18), which is provided between the base (36) of the housing and the wound elements (14), which have a predeterminable spacing from this.

13. Power capacitor in accordance with any one of the preceding claims, **characterized in that** the housing cover (20) is thinner than the housing base (36); and **in that** at least one electrically, non-conductive insulating insert (38) is provided in the region of the wound elements (14) between the side walls (24) of the housing (12), on the one hand, and the filling (18) or the wound elements (14), on the other hand.

14. Power capacitor in accordance with any one of the preceding claims, **characterized in that** at least one electrically, non-conductive insulating layer (38) is provided between adjacently disposed, wound elements (14).

15. Power capacitor in accordance with any one of the preceding claims, **characterized in that** at least one, electrically non-conductive insulating insert (38) is provided between wound elements (14) arranged next to one another or above one another.

## Revendications

1. Condensateur de puissance (10), comportant plusieurs éléments bobinés (14) ronds logés dans un boîtier (12) commun,
**caractérisé en ce que**
au moins un groupe d'éléments bobinés constitué de trois éléments bobinés (14) ronds est logé dans le boîtier (12), dont les éléments bobinés (14) sont disposés en étoile les uns à coté des autres avec des axes (A) parallèles les uns par rapport aux autres, et **en ce que** le boîtier (12) possède en section transversale la forme générale d'un triangle, dont les angles sont arrondis et possèdent un rayon de courbure qui correspond, au moins sensiblement, au rayon des éléments bobinés (14) ronds.

2. Condensateur de puissance selon la revendication 1,
**caractérisé en ce que**
les trois éléments bobinés (14) ont un diamètre identique, et **en ce que** le boîtier (12) possède en section transversale la forme générale d'un triangle équilatéral.

3. Condensateur de puissance selon la revendication 1 ou 2,
**caractérisé en ce que**
plusieurs groupes d'éléments bobinés disposés les uns au-dessus des autres, constitués chacun de trois éléments bobinés (14) ronds, sont logés dans le boîtier (12).

4. Condensateur de puissance selon l'une quelconque des revendications précédentes,
**caractérisé en ce que** le boîtier (12) imprégné est constitué d'un métal ou d'une matière plastique ou d'aluminium extrudé.

5. Condensateur de puissance selon l'une quelconque des revendications précédentes,
**caractérisé en ce que**
le boîtier (12) est agencé sous la forme d'un boîtier fermé et est pourvu, au moins partiellement, d'un remplissage (18) de matériau de scellement, d'huile et/ou de gaz.

6. Condensateur de puissance selon l'une quelconque des revendications précédentes,
**caractérisé en ce que**
il est doté d'une sécurité de coupure contre les suppressions.

7. Condensateur de puissance selon la revendication 6,
**caractérisé en ce que**,
du côté du couvercle, des raccordements électriques (16) passent par le boîtier (12) fermé, partiellement pourvu d'un remplissage (18), qui s'étendent à l'intérieur du boîtier (12) à travers un espace sous pression (22) ménagée entre le remplissage (18) et le couvercle (20) de boîtier, et qui peuvent être interrompus lors de l'apparition d'une surpression pouvant être prédéterminée dans le boîtier (12).

8. Condensateur de puissance selon la revendication 7,
**caractérisé en ce que**
le boîtier (12) est rempli partiellement d'un matériau de scellement isolant (18) pouvant être traversé par du gaz comprimé, **en ce que** l'espace sous pression (22) est prévu entre ce matériau de scellement (18) et le couvercle (20) de boîtier, et **en ce que** le boîtier (12) comporte trois parois latérales (24) réalisées de façon sensiblement plane pouvant gonfler lors de la libération de gaz comprimé, et créer des liaisons vers l'espace sous pression (22).

9. Condensateur de puissance selon l'une quelconque des revendications 6 à 8,
**caractérisé en ce que**
les raccordements électriques (16) sont fixés au couvercle (20) de boîtier, et sont arrachés par le couvercle (20) de boîtier se bombant vers l'extérieur lors d'une alimentation en gaz comprimé de l'espace sous pression (22) s'effectuant avec une déformation des parois latérales (24).

10. Condensateur de puissance selon la revendication 9,
**caractérisé en ce que**
les raccordements électriques (16) sont fixés, d'une part au couvercle (20) de boîtier, et d'autre part sur au moins un élément de soutien (26), décrochement de boîtier et/ou analogue disposé dans l'espace sous pression (22), qui est situé à un écartement pouvant être prédéterminé par rapport au couvercle (20) de boîtier.

11. Condensateur de puissance selon la revendication 10,
**caractérisé en ce que**
les raccordements électriques (16) sont fixés à l'intérieur du boîtier (12) sur au moins un élément de soutien (26), dont l'écartement par rapport au couvercle (20) de boîtier est défini par au moins un écarteur ou élément serre-flanc (28).

12. Condensateur de puissance selon l'une quelconque des revendications précédentes,
**caractérisé en ce que**
il est prévu un fond renforcé (36) de boîtier, qui est de préférence muni d'un élément de fixation (34), le fond (36) de boîtier étant renforcé, au moins partiellement, par du matériau de scellement (18), qui est prévu entre le fond (36) de boîtier et les éléments bobinés (14) situés à un écartement pouvant être prédéterminé par rapport à celui-ci.

13. Condensateur de puissance selon l'une quelconque des revendications précédentes,
**caractérisé en ce que**
le couvercle (20) de boîtier est réalisé avec une épaisseur plus mince que le fond (36) de boîtier, et **en ce que**, entre les parois latérales (24) du boîtier (12) d'une part, et le remplissage (18) ou les éléments bobinés (14) d'autre part, il est de préférence prévu au moins un insert d'isolation (38) électriquement non conducteur, situé dans la zone des éléments bobinés (14).

14. Condensateur de puissance selon l'une quelconque des revendications précédentes,
**caractérisé en ce que**
au moins un insert d'isolation (38) électriquement non conducteur est prévu entre des éléments bobinés (14) disposés les uns à côté des autres.

15. Condensateur de puissance selon l'une quelconque des revendications précédentes,
**caractérisé en ce que**
au moins un insert d'isolation (38) électriquement non conducteur est prévu entre des éléments bobinés (14) disposés les uns à côté des autres ou les uns au-dessus des autres.
